# EUROPEAN PATENT APPLICATION

(11) **EP 2 940 438 A1**
(43) Date of publication of application: **04.11.2015**
(21) Application number: 15161088.8
(22) Date of filing: 26.03.2015
(51) Int. Cl.: G01G 19/393, B07C 5/22, G01G 19/03

(54) **METHOD AND APPARATUS FOR GRADING FOOD PIECES**

(30) Priority: 01.05.2014 GB 201407651
(71) Applicant: Ishida Europe Limited, Birmingham, West Midlands B32 3DB (GB)
(72) Inventor: Clark, Nickolas Martin, Sedgley, West Midlands DY3 3RT (GB); Socolovsky, Pablo Gabriel, Birmingham, West Midlands B5 4AW (GB)
(74) Representative: Skone James, Robert Edmund

(57) **Abstract**

A method of and apparatus for grading food pieces is described. The method comprises feeding individual food pieces in sequence to a weighing machine (1) having a plurality of weigh hoppers (10), each food piece being fed to a respective weigh hopper; determining the weights of the food pieces in the hoppers (10); and dispensing the food pieces from the weighing machine (1) in different manners depending upon the relationship between the weight of each food piece and at least one predetermined range of weights such that food pieces with weights falling within the predetermined range are dispensed in the same manner different from the manner in which those with weights falling outside the predetermined range are dispensed.

## Description

The invention relates to a method and apparatus for grading food pieces such as pieces of poultry although it is also suitable for other dry or wet products that require piece weight calibration.

There is a frequent requirement by food retailers for the provision of one or more food pieces, for example breasts, wings or legs of chickens or other poultry, in trays for subsequent packaging and sale. It is therefore necessary for the chicken pieces to be graded or separated according to predefined weight bands or ranges so that only those pieces falling within a particular weight band are packed in the same tray.

Conventionally, grading is achieved by feeding the pieces individually to a check weigher and then sorting the pieces according to their weight between different outlets, those pieces falling within the desired weight band then being packed into trays or the like.

Conventional grading systems, however, are bulky and slow and not well adapted to high speed processing. Also, they can only grade to a relatively coarse accuracy, for example ± 2gm.

EP-A-1118843 describes an example of a weighing and sorting apparatus for poultry parts in which individual poultry parts are fed to a number of scale units in which they are individually weighed. The weighed poultry parts are then discharged from the scale units to a discharge sorter module downstream of the scale units which then sorts the poultry parts according to their weight. The disadvantage of this apparatus is the volume taken up by the apparatus.

A similar example of sorting apparatus is shown in US-A-5246118 in which articles are fed individually into respective weigh buckets in which they are weighed and then discharged onto a common conveyor belt of a sorting system which ejects articles according to their weight in to respective collector bins.

In accordance with a first aspect of the present invention, a method of grading food pieces comprises feeding individual food pieces in sequence to a weighing machine having a plurality of weigh hoppers, each food piece being fed to a respective weigh hopper; determining the weights of the food pieces in the hoppers; and dispensing the food pieces from the weighing machine in different manners depending upon the relationship between the weight of each food piece and at least one predetermined range of weights such that food pieces with weights falling within the predetermined range are dispensed in the same manner different from the manner in which those with weights falling outside the predetermined range are dispensed.

In accordance with a second aspect of the present invention, apparatus for grading food pieces comprises a weighing machine having a plurality of weigh hoppers; a food piece distribution system for supplying individual food pieces to respective weigh hoppers; and a control system for determining the weights of the food pieces in the weigh hoppers or additional hoppers downstream of the weigh hoppers, and for controlling the weigh hoppers to dispense the food pieces in different manners depending upon the relationship between the weight of each food piece and at least one predetermined range of weights such that food pieces with weights falling within the predetermined range are dispensed in the same manner different from the manner in which those with weights falling outside the predetermined range are dispensed.

We have devised a new method and apparatus for grading food pieces in which a weighing machine having a plurality of weigh hoppers is used and food pieces are fed individually to respective weigh hoppers. Each food piece is then separately graded by the weighing machine and then released in one of a number of different manners depending upon the relationship between the weight of the food piece and at least one predetermined range of weights.

With this invention therefore the weighing machine itself is controlled to achieve the grading or sorting without the need for a further downstream sorting module, in contrast with apparatus of the type described in EP-A-1118843.

A particular advantage of the method and apparatus of the invention is that the food pieces are weighed statically which achieves a much finer resolution than the known dynamic grading methods, for example down to ± 0.1 gm.

In some examples, food pieces are dispensed directly from the weigh hoppers into respective guides in accordance with the dispense manner but in other examples, the weigh hoppers could dispense food pieces into respective pool hoppers or the like from which the food pieces are then dispensed according to their weights.

By having a plurality of weigh hoppers, food pieces can be handled at relatively high speed and, particularly in the case where it is desirable to process food pieces falling within more than one predetermined range, this can be achieved in a simple and compact manner.

Food pieces may be dispensed in different manners by guiding the food pieces to one of at least two different locations. Alternatively, or additionally, the food pieces may be dispensed in different manners by dispensing the food pieces to the same location but at spaced apart times. In the latter case, providing the downstream processing equipment is made aware of the weight of each food piece being dispensed, it can then process that food piece accordingly.

For example, in the case of chicken pieces, the natural distribution of weights is between 25g-100g. If a customer demands product between 40g-60g, the method and apparatus will sort or grade products of the demanded weight so that they are dispensed in one manner and the remainder in another.

In more complex methods, the food pieces are dispensed from the weigh hoppers in different manners depending upon the relationship between the weight of each food piece and two or more predetermined ranges of weights such that food pieces with weights falling within a predetermined range are dispensed in a manner associated with that predetermined range but the manners being different for each predetermined range and for those food pieces falling outside the predetermined ranges.

In this case, it is possible to dispense error product in one manner (where "error product" means product with weights falling outside the predetermined range(s)), for example one direction, and the other desired weight range or ranges sequentially in another manner, for example onto a collection belt. Thus, given a natural distribution of product of 25g-100g, two weight ranges may be required, namely 30g-50g and 60g-80g respectively. If an individual weigh hopper determines that the weight of product in that hopper is below 30g, between 50g and 60g, or above 80g, it will be classified and rejected as error product. With the first dispense operation, any weights that have been calculated within 30g and 50g will be dispensed immediately while the remaining product in the range 60g-80g will be held in the corresponding weigh hoppers. During the next machine cycle, the weight between 60g and 80g will be dispensed and any product held in the weigh hoppers in the range 30g-50g will be held and discharged in the next weighing cycle.

In some cases, the method may further comprise combining one or more dispensed food pieces having weights within the same predetermined range to produce a desired combination weight of such food pieces. This is useful when it is desired to package more than one food piece in the same weight range in the same pack.

The weighing machine is conveniently based on a conventional combination weigher, for example of the type manufactured and sold by Ishida Co., Ltd. of Japan. Typically, the weigh hoppers are arranged annularly, the food piece distribution system including a rotatable member having a receiving end to which individual food pieces are supplied in use and a dispense end at which food pieces are dispensed, the dispense end being rotatable relative to the receiving end so as to be aligned with successive weigh hoppers, or pool hoppers upstream of respective weigh hoppers.

The food piece distribution system can include a variety of alternative distribution members including vibrating troughs, a vibrating cone-shaped table or the like. The supply of food pieces to the food piece distribution member could be by dropping the food pieces onto the member but preferably the food piece distribution system includes a dual lane supply conveyor, each lane of the conveyor having respective compartments into which individual food pieces are supplied in use, the conveyor extending to a dispense position at which the food pieces are passed to distribution apparatus for supply to the weigh hoppers. Typically, at least that part of the dual lane supply conveyor approaching the dispense position is inclined upwardly. This causes each food piece to rest against a lower wall of each compartment which assists with supply timing.

Particularly preferably, the distribution apparatus comprises the rotatable member, and wherein the receiving end of the rotatable member is located at the dispense position of the conveyor.

Each weigh hopper or additional hopper (downstream of a weigh hopper) may have a single dispense gate but in most cases, one or more of the weigh hoppers or additional hoppers has a pair of dispense gates individually operable under the control of the control system to direct food pieces in respectively different directions. This latter arrangement makes it easier to dispense food pieces in the different manners by opening a respective one of the pair of gates.

In this latter case, the apparatus may further comprise a set of guides downstream of the weigh or additional hoppers whereby one or more of the set is positioned to receive food pieces in response to a first dispense gate opening and one or more of the others of the set is positioned to receive food pieces in response to a second dispense gate opening. For example, the set of guides may comprise an inner guide positioned to receive food pieces in response to the first dispense gate opening, and two or more outer guides positioned to receive food pieces in response to the second dispense gate opening. Alternatively, the apparatus may further comprise a movable guide or guides downstream of each weigh hopper and whose position is controlled by the control system to guide food pieces dispensed by the weigh hoppers or additional hoppers to respective locations corresponding to their weight. This configuration is suitable for use with weigh hoppers having both a single dispense gate and a pair of dispense gates.

In other examples, the apparatus further comprises an inclined surface downstream of the weigh hoppers or additional hoppers, the inclined surface including at least one gate in alignment with food pieces dispensed from a weigh hopper or additional hopper in use and selectively operable to intercept and direct a food piece away from the inclined surface according to its weight. Typically, there will be a sequence of gates in alignment with each weigh hopper or additional hopper so that food pieces with different weights or in different weight bands can be intercepted and directed away to respective destinations by operating appropriate ones of the gates.

In yet other examples, the apparatus further comprises a pair of rotatably mounted disks above the conveyors and having different radii for receiving food pieces dispensed from the weigh hoppers or additional hoppers in response to opening of respective dispense gates, wherein each disk cooperates with a respective scraper so that food pieces are guided from the disk onto a corresponding conveyor as the disk rotates.

This use of rotatably mounted disks can also be used in an embodiment in which the weigh hoppers dispense product into respective additional downstream hoppers which in turn have pairs of dispense gates which can be operated to guide the pieces onto a respective one of the disks.

Some examples of methods and apparatus according to the invention will now be described with reference to the accompanying drawings, in which:-
Figures 1A and 1B are a schematic plan and side elevation respectively of an embodiment of apparatus according to the invention;
Figure 2 illustrates part of the supply conveyor shown in Figure 1, in more detail;
Figure 3 is a schematic side view of a weighing machine for use in a method and apparatus according to the invention;
Figure 3A is a view of a weighing machine similar to Figure 3 but with additional booster hoppers;
Figures 4A and 4B are a section and perspective view respectively illustrating part of a modified embodiment of the Figure 3 embodiment;
Figures 5-9 illustrate parts of further embodiments according to the invention;
Figure 10 is a block diagram of a control system for use with the Figure 3 embodiment;
Figure 11 is a flow diagram illustrating operation of the control system of Figure 10; and
Figure 12 illustrates a further example of a food piece distribution apparatus.

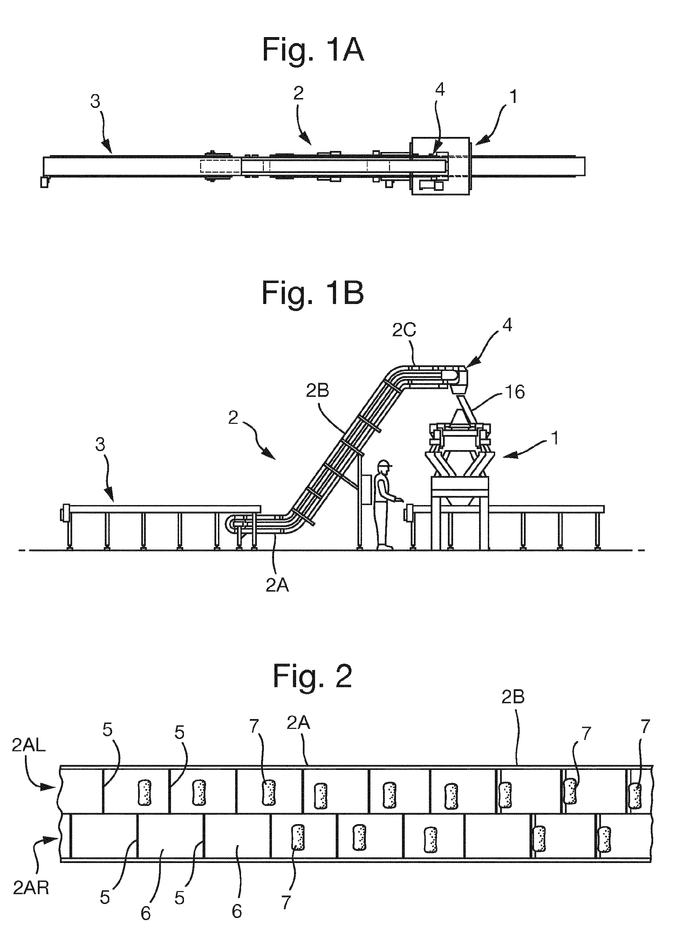

Figures 1A and 1B illustrate the overall layout of an example of an embodiment of the invention. A combination weighing machine 1, of the type manufactured by Ishida Co., Ltd. of Japan, is located beneath the discharge end of a supply conveyor 2 which extends from a cutting area 3, at which poultry pieces are cut up, to a discharge end 4 located above the combination weighing machine 1 and in line with its central axis. The conveyor 2 comprises a horizontal section 2A leading from the cutting area 3, and an inclined section 2B leading from the horizontal section 2A to a further horizontal section 2C.

The section 2A is shown in more detail in Figure 2 and it can be seen that it comprises left and right sections 2AL and 2AR, each of which is divided by flights 5 into separate compartments 6 into which individual poultry pieces are placed. As can be seen in Figure 2, initially the poultry pieces 7 are randomly located within each compartment 6 but as the conveyor system rises at 2B, the pieces 7 fall back against the lower flights 5 and this assists in ensuring that the product or pieces feed onto the weighing machine 1 at an equal and controlled pitch.

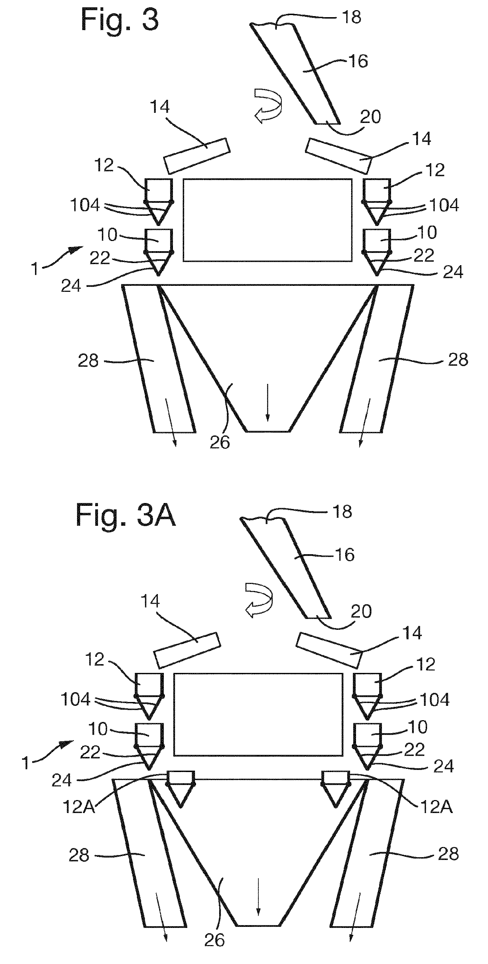

A first example of the weighing machine or weigher 1 is shown schematically in Figure 3. The weigher 1 comprises an annular array of (N) weigh hoppers 10 (only two shown in Figure 3 although typically N = 10 or 12); and an annular array of pool hoppers 12, each pool hopper being located above a respective weigh hopper 10 and having dispense gates 104.

Each pool hopper 12 is located at the end of a respective guide 40 while above the guides 14 is located a rotating chute 16.

The inlet end 18 of the chute 16 is located beneath the dispense end 4 of the conveyor 2 and receives product falling from the end of the conveyor 2. The chute 16 rotates in use so that individual product or pieces are delivered to respective guides 14 via the dispense end 20 of the chute.

The guides 14 may be stationary so that the pieces simply roll or slide into the respective pool hoppers 12 but preferably are reciprocated or vibrated or the like. Alternative components for the guides 14 include belts, screws and chutes.

Although pool hoppers 12 have been shown in this case, these could be omitted and product fed directly to the weigh hoppers 10. Alternatively, the pool hoppers 12 could be relocated as "additional hoppers" below the weigh hoppers 10, in which case the gates of the pool hoppers will be operated in the way described below in connection with the weigh hoppers while the weigh hoppers will just dispense into the pool hoppers.

Each weigh hopper 10 has a pair of gates or hatches 22,24 which can be individually and selectively opened to dispense product from the weigh hoppers.

Beneath the weigh hoppers 10 are provided an inner chute 26 and an outer chute 28 or a set of outer chutes 28, one corresponding to each weigh hopper 10.

Opening the gates 22 of the weigh hoppers 10 will cause product in the weigh hoppers to fall into the chute 26 while opening the gates 24 on the weigh hoppers 10 will cause product to fall into the chute or chutes 28.

In the simplest case where only product within one desired weight range is to be separated out or graded, this product could be diverted into the chute 26 while all other product is diverted into the chute or chutes 28.

Beneath the chute 26 is provided a packaging machine (not shown) for transferring the graded product into trays which can then be sealed in a conventional manner. As an alternative to a packaging machine, the graded product may be dispensed on to a conveyor for subsequent manual or automatic handling, for example marination.

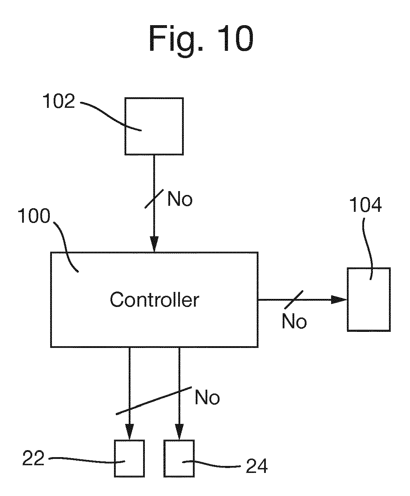

A schematic diagram of part of a control system for use with the Figure 3 embodiment is shown in Figure 10 comprising a controller 100 which will be a suitably programmed microprocessor. The controller 100 is connected in parallel to a load cell 102 of each of the N weigh hoppers 10 so that data defining the weight of a food piece in each weigh hopper is communicated to the controller. The controller 100 is also connected to the gates 104 of each pool hopper 12 and to the gates 22,24 of each weigh hopper 10 so that those gates can be controlled independently and individually.

In operation, the chute 16 continuously rotates so as to feed single food pieces into respective guides 14 for transfer to corresponding pool hoppers 12 (or weigh hoppers 10). The chute 16 rotates at a speed such that no more than one piece is supplied to a guide 14 at a time. The weighing machine must have completed its cycle before the chute 16 has rotated 360° and so in a preferred approach, the chute 16 rotates at a higher speed and feeds product pieces to alternate guides 14. For example, if each weigh hopper is capable of operating up to 60 weights per minute and the machine has 10 weigh hoppers, the maximum weighing speed would theoretically be 600Wpm. Assuming the machine is supplied with 200 pieces of product per minute, these could be fed individually to every third pool hopper but any product falling more slowly or more quickly than the average feed will have a high probability of feeding into the previous or subsequent guide 14 and this will not cause problems with the weighing performance of the grading machine.

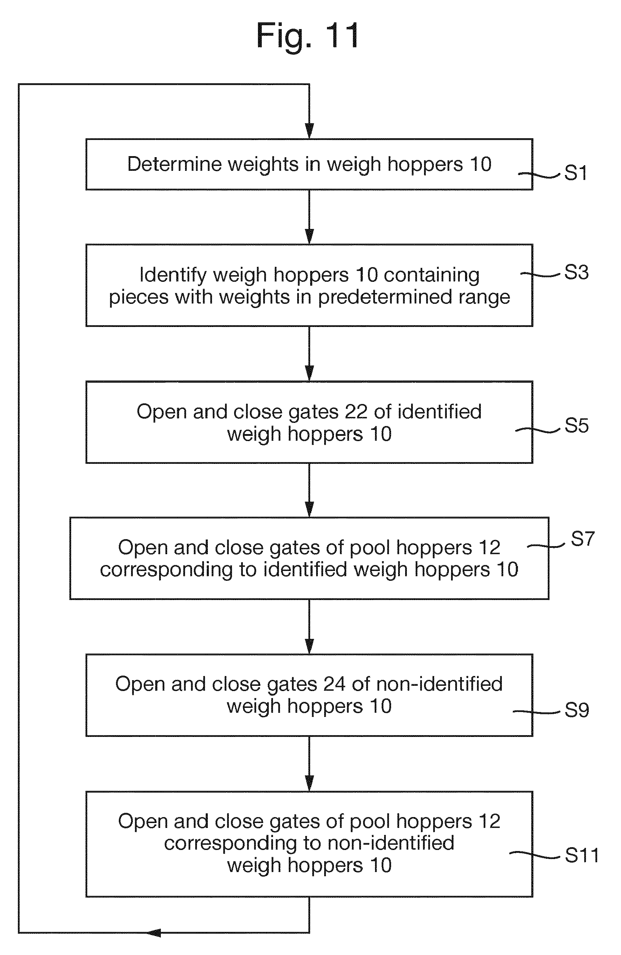

In a full machine cycle shown in Figure 11, the controller 100 will first determine the piece weights in each weigh hopper 10 via the respective load cells 102 (step S1 in Figure 11). The controller 100 will then identify which weigh hoppers 10 contain a food piece with a weight falling within a desired weight range, for example 30g-50g (step S3). The gates 22 of those weigh hoppers 10 will be opened and then closed, typically successively, so that their respective pieces fall in sequence into the chute 26 for subsequent packaging (step S5) either individually or in sets. Where the machine is simply grading food pieces, then all weigh hoppers 10 containing food pieces within the desired range will be dispensed. Where the machine is supplying food pieces to be packaged into trays or other containers, then only sufficient weigh hoppers 10 are opened, either at the same time or successively within a period corresponding to the time needed to pack a container, to provide the correct number of food pieces to be packaged.

Next, the gates 104 of the pool hoppers 12 corresponding to the empty weigh hoppers 10 will be opened and closed by the controller 100 to deliver product into those weigh hoppers (step S7) while at the same time (or before or after) weigh hoppers 10 having pieces with weights falling outside the desired range will dispense those products into the chute(s) 28 by opening the respective gates 24 (step S9). In the next step, the gates of the pool hoppers 12 corresponding to the most recently emptied weigh hoppers 10 will be opened and then closed to supply product to those weigh hoppers 10 (step S11) and the cycle will repeat.

Further combinations of weights can be obtained by providing additional booster hoppers 12A (Figure 3A) downstream of the weigh hoppers 10. These can then receive the same grade pieces but be opened in selected combinations to dispense corresponding weight combinations into the chute 26.

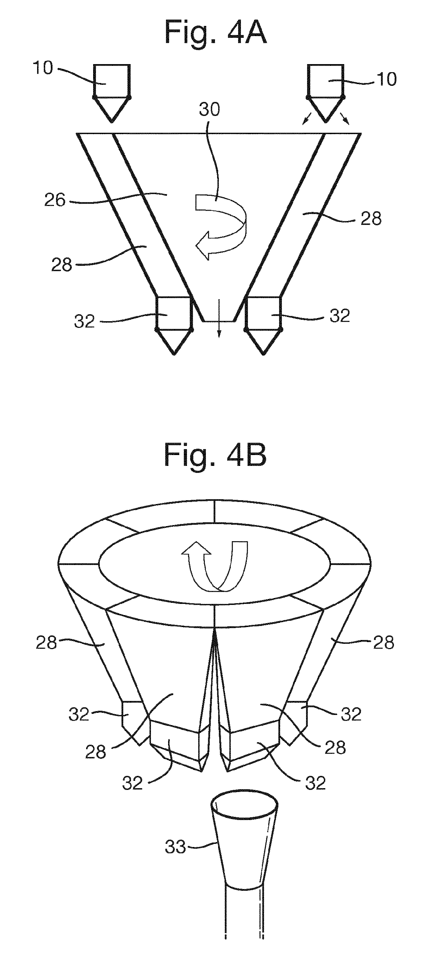

Figures 4A and 4B illustrate part of a modified embodiment of that shown in Figure 3 in which two or more chutes 28 are provided circumferentially spaced about the chute 26 and the combined set of chutes 26,28 rotate as shown by the arrow 30. At the end of each chute 28 is provided a timing hopper 32 into which product released into the chutes 28 is fed. The function of the timing hoppers 32 is to collect specific numbers of food pieces each within a selected weight range as are required to be packaged in a single package, and once the correct number of pieces has been collected, and the timing hopper 32 is correctly positioned over a collection chute 33 (Figure 4B) leading to a packaging machine (not shown), the product is released to the packaging machine. It will be noted that in this embodiment, pieces within a desired weight range are dispensed to the chutes 28 while all other weights are dispensed to the chute 26. In a modification, each timing hopper 32 could collect pieces having weights in different respective ranges so that two types of package can be made.

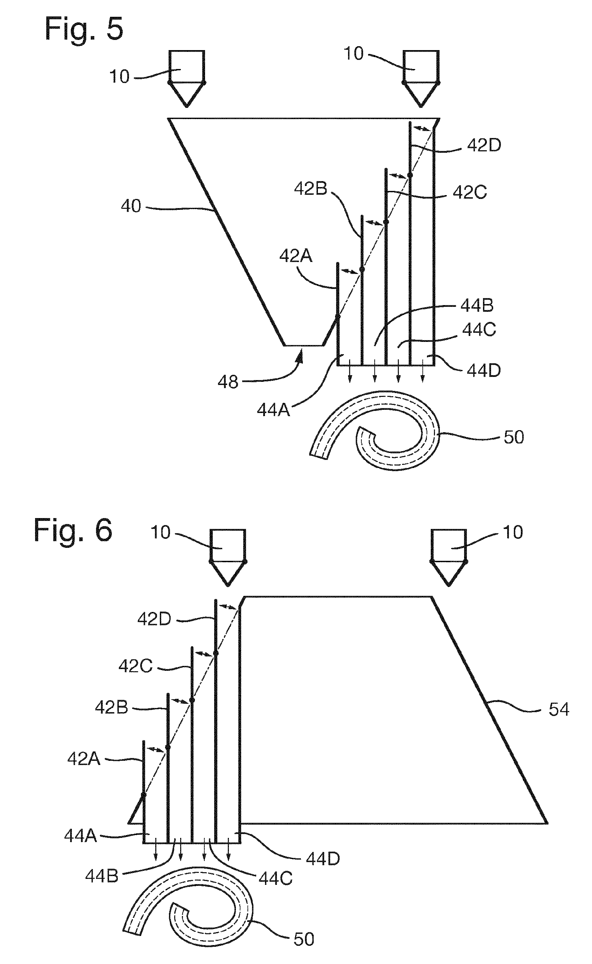

In the example shown in Figure 5, the chutes 26,28 in Figure 3 are replaced by a single downwardly tapering chute 40 having sets of four gates 42A-42D, each set arranged in alignment in the wall of the chute 40 and in alignment with respective weigh hoppers 10. Only the set of gates 42A-42D associated with the right hand weigh hopper 10 in Figure 5 are shown.

In this example, each gate 42A-42D is associated with a particular weight range of product. Thus, grading is achieved by monitoring the weight of a product piece in the weigh hopper 10, releasing the piece into the chute 40 and opening the appropriate gate 42A-42D corresponding to the weight of the product piece so that it is guided into a respective outlet channel 44A-44D. From there, the product will fall onto a suitable collection mechanism such as a spiral wound belt 50 with products of different weights falling onto different positions spaced across the width of the belt. These can then be transported in a conventional manner by activation of the belt to locations where the respective pieces are removed from the belt and packaged.

A suitable belt 50 can be obtained from Intralox LLC of Louisiana, USA.

Product pieces falling outside any of the desired ranges will slide down the chute 40 (with the gates 42A-42D closed) and exit at the bottom of the chute as shown at 48 onto a further lateral, innermost position on the belt 50.

Figure 6 illustrates a modified form of the Figure 5 example in which the chute 40 has been inverted as shown at 54, the gates 42A-42D being selectively openable in an outward direction to guide product pieces within respective weight ranges into the channels 44A-44D. Product pieces falling outside the desired ranges are directed through the centre of the chute 54. As in the Figure 5 example, products within the desired ranges fall onto corresponding laterally spaced positions on a spiral belt 50 for subsequent distribution while rejected products are directed onto a lateral outermost position on the belt 52.

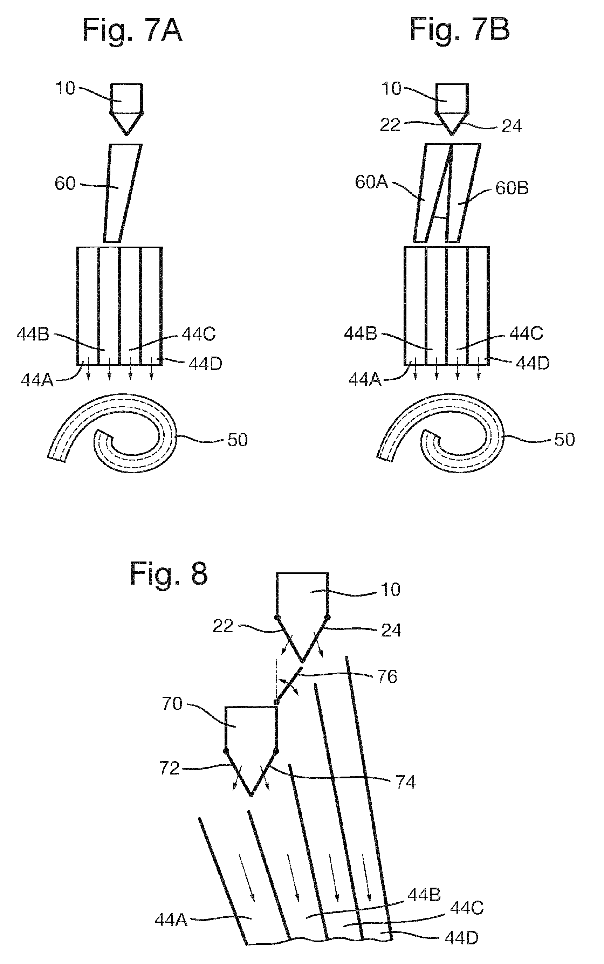

Figures 7A and 7B illustrate a further modified example of the Figure 3 embodiment.

In the embodiment of Figure 7A, a movable chute 60 is located beneath each weigh hopper 10 and can be brought into alignment with respective discharge channels 44A-44D depending upon the weight of a product piece in the weigh hopper. A belt 50 is located beneath the channels 44A-D to receive the graded pieces and distribute them as described above.

Figure 7B illustrates a modified form of the Figure 7A example in which a pair of chutes 60A,60B are located beneath each weigh hopper 10, the chutes being movable together to bring a respective chute into alignment with a respective discharge channel 44A-D. In this example, if the gate 22 of the weigh hopper 10 is opened then product will drop into the chute 60A while if the gate 24 of the weigh hopper 10 is opened, product will fall into the chute 60B. This arrangement speeds up the distribution of product pieces as compared with the Figure 7A example.

In the embodiment of Figure 8, a booster hopper 70 is located beneath each weigh hopper 10. This enables pieces to be graded into four possible weight ranges. Each booster hopper 70 has a pair of discharge gates 72,74 which can be independently opened. A set of four discharge channels 44A-D is positioned beneath the weigh hopper and booster hopper pairs.

In use, a food piece falling within a first weight range is directed to the discharge channel 44D by opening the gate 24 of the weigh hopper 10. All other food pieces are fed out of the weigh hopper 10 by opening discharge gate 22. These pieces fall onto an intermediate gate 76 which can be opened to allow a food piece with a weight falling within a second predetermined range to be directed into the discharge channel 44C. Other food pieces with weights falling outside that weight range will be directed into the booster hopper 70. A food piece in the booster hopper 70 falling within a third predetermined weight range is fed into the discharge channel 44B by opening the gate 74 while all other piece weights are fed into the discharge channel 44A by opening the gate 72.

As before, the channels 44A-44D are arranged to dispense food piece onto respective positions of a belt 50 (not shown).

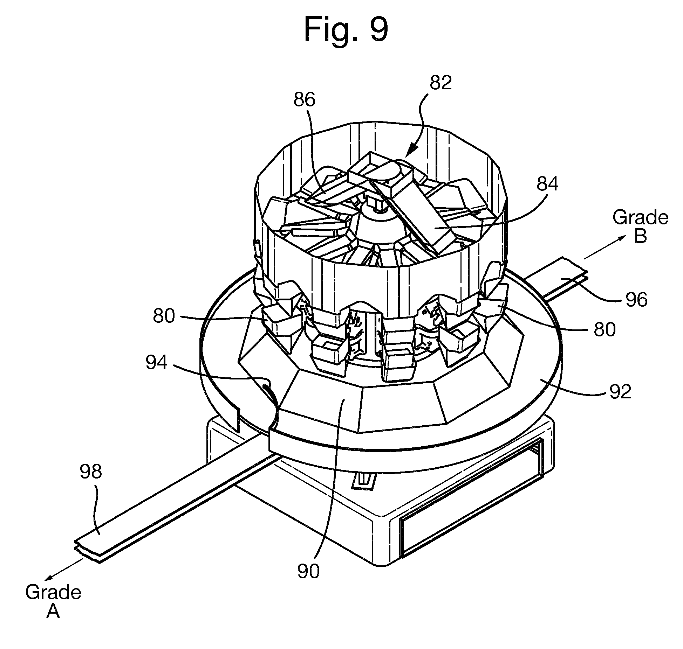

Figure 9 illustrates a further embodiment in which an annular arrangement of timing hoppers 80 is provided above a central axis at the top of which is located a rotating distribution mechanism 82 having one or more distribution chutes (two being shown in Figure 9) 84,86 which receive food pieces from a combination weigher (not shown) located above the apparatus shown in Figure 9. The food pieces are distributed singly to respective hoppers 80 in a known manner such that the control system (not shown) knows the weights of each food piece in each timing hopper 80.

Each hopper 80 has a pair of inner and outer dispense gates located along respective radii extending out from the axis of the machine, the hoppers being positioned such that when the inner dispense gate opens, product is directed onto an inner rotating, annular conveyor 90 while if the outer dispense gate is opened, product falls onto an outer, annular conveyor 92.

The conveyors 90,92 rotate in an anti-clockwise direction and each cooperates with a respective guide (only a guide 94 can be seen in the drawing) which, in the case of the conveyor 90, guides product radially inwardly to drop down onto a conveyor 96 or in the case of the conveyor 92, guides product onto a conveyor 98. In this way, incoming product pieces can be graded into one of two grades.

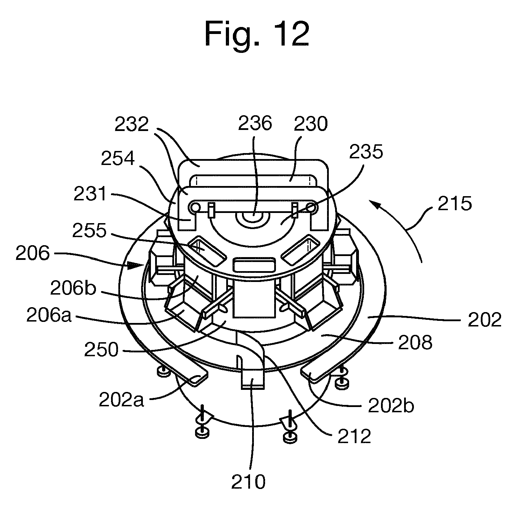

In the examples described above, graded food pieces have been dispensed onto conveyor belts 50 or directly into packaging machines (Figures 3 and 4). A further option is to dispense the graded food pieces into a batching apparatus such as that shown in Figure 12 and described in more detail in WO 2013/190297 incorporated herein by reference. In this batching apparatus, a number of operators are positioned around a circular batching table 202. The grading apparatus, for example the combination weigher 1 shown in Figure 1B, is located above the batching apparatus shown in Figure 12.

The batching table 202 takes the form of an incomplete annulus. In this context the term "incomplete annulus" means an annulus comprising a gap such that the batching table has two ends 202a, 202b (see Figure 12). The batching apparatus also comprises an annular feed conveyor 208 concentric to and adjacent the batching table 202 and positioned on the inner side of the batching table 202. The annular feed conveyor 208 is typically constructed of plastic, and may for example take the form of a polypropylene annular disk, or a series of interlocking plastic links. Alternatively, the feed conveyor 208 may be comprised of a plurality of overlapping rubber slats. Constructing the feed conveyor 208 from plastic advantageously reduces the noise of the batching system.

The radius of the outer edge of the feed conveyor 208 is substantially identical to the inner radius of the batching table 202 such that there is no gap between the conveyor and batching table. However, other configurations are envisaged, for example in one embodiment there is a gap between the batching table 202 and the conveyor 208. The incomplete annular nature of the batching table allows a packaging conveyor 210 to extend through the gap and directly abut feed conveyor 208, as seen clearly in Figure 12. This provides a compact batching system which not only saves spaces, but also allows simple integration of the batching system with other packaging line modules (in this case, the packaging conveyor may lead to a tray sealing module, for example). Modern day packaging lines are increasingly comprised of a number of independently produced and sold "modules", and therefore this feature of the present batching system provides a clear advantage.

The widths of the batching table and conveyor are chosen to fit the intended purpose of the production line. For example in a chicken factory the conveyor and batching table will have widths that accommodate the largest trays that will be run through the production line.

On the inner side of the feed conveyor 208 is a substantially cylindrical module 250. A flange 251 is positioned around the circumference of the module 250 where the module abuts the feed conveyor 208, providing a smooth interface between the module wall and the feed conveyor 208, as seen in Figure 12. This prevents trays moving on the conveyor from snagging on the module. Positioned on the outer surface of the module 250 is a plurality of filling stations 206, more clearly seen in Figure 12. Each filling station 206 comprises a holding hopper 206b and a presentation tray 206a. The number of filling stations 206 in a batching system 200 depends on the size of each filling station and the circumference of the module 250. In this embodiment there are seven filling stations positioned around the module 250. As the module 250 has a substantially circular cross section, the filling stations 206 are equidistant from the weigher 204. Other module cross sections are envisaged however, such as a square.

In use, graded food product is deposited onto a rotatable batch conveyor 230.

The endless linear conveyor 230 is mounted to conveyor support 231. A circular plate 254 is mounted to the top of the module 250 as seen in Figure 12. The circular plate has a larger radius than that of the module 250 such that it overhangs the outer edge of the module 250. Spaced around the outer perimeter of the circular plate 254 is a plurality of via holes 255 corresponding to the plurality of filling stations 206, as seen in Figure 12. Each filling station 206 has a corresponding via hole 255.

The conveyor support 231 is mounted on rotatable plate 235 via a spindle 236. The conveyor support 231 is spaced from the circular plate 254 such that it can rotate freely. The rotatable plate 235 can rotate either clockwise or anticlockwise, therefore rotating the batch conveyor 230. Alternatively, the plate 235 may be stationary and the spindle rotates, thereby rotating the conveyor support 231.

In use, a graded food piece from the weigher is deposited on the batch conveyor 230. Typically the food piece will be deposited onto the centre of the batch conveyor 230. At the beginning of the batching process there will be no batches in the filling stations 206, and so the batch conveyor 230 will be operated to transport the batches from the weigher to each of the filling stations.

When transporting a food piece to filling station 206, the food piece will be deposited on to batch conveyor 230. The conveyor 230 will then be run such that the food piece moves along the conveyor towards via hole 255. At the end of the batch conveyor 230, the batch falls from the conveyor through via hole 255 and into the holding hopper of the corresponding filling station 206. Flanges 232 of conveyor support 230 protrude above the level of the batch conveyor and aid in guiding the food pieces. The food piece is then moved manually or automatically from the holding hopper 206b into the presentation tray 206a, from where the operator can pack the batch into a tray.

In use, each operator takes a tray from a tray de-nester or stack of trays (not shown) and fills the tray with the food piece in the presentation tray 206a of his respective filling station. This takes place on the batching table 202. The operator then places the filled tray onto feed conveyor 208. The feed conveyor 208 rotates in an anticlockwise direction 215, transporting the filled trays via guide 212 onto packaging conveyor 210. The filled trays are then conveyed on packaging conveyor 210 to the remainder of the food packaging system, where they can then be sealed, labelled and transported as desired. The packaging conveyor 210 abuts the feed conveyor 208 in the gap of the incomplete annular batching table 208, providing a compact and space-saving batching system.

## Claims

1. A method of grading food pieces, the method comprising feeding individual food pieces in sequence to a weighing machine having a plurality of weigh hoppers, each food piece being fed to a respective weigh hopper; determining the weights of the food pieces in the hoppers; and dispensing the food pieces from the weighing machine in different manners depending upon the relationship between the weight of each food piece and at least one predetermined range of weights such that food pieces with weights falling within the predetermined range are dispensed in the same manner different from the manner in which those with weights falling outside the predetermined range are dispensed.

2. A method according to claim 1, wherein the food pieces are dispensed from the weighing machine in different manners depending upon the relationship between the weight of each food piece and two or more predetermined ranges of weights such that food pieces with weights falling within a predetermined range are dispensed in a manner associated with that predetermined range but the manners being different for each predetermined range and for those food pieces falling outside the predetermined ranges.

3. A method according to claim 1 or claim 2, wherein the food pieces are dispensed in the different manners from the weigh hoppers or from respective additional hoppers located downstream of corresponding weigh hoppers.

4. A method according to any of the preceding claims, wherein the step of dispensing the food pieces in different manners includes guiding the food pieces to one of at least two different locations.

5. A method according to any of the preceding claims, wherein dispensing the food pieces in different manners includes dispensing the food pieces to the same location but at spaced apart times.

6. A method according to any of the preceding claims, further comprising combining one or more dispensed food pieces having weights within the same predetermined range to produce a desired combination weight of such food pieces.

7. A method according to any of the preceding claims, wherein the food pieces comprise poultry pieces, for example chicken pieces.

8. Apparatus for grading food pieces, the apparatus comprising a weighing machine having a plurality of weigh hoppers; a food piece distribution system for supplying individual food pieces to respective weigh hoppers; and a control system for determining the weights of the food pieces in the weigh hoppers, and for controlling the weigh hoppers or additional hoppers downstream of the weigh hoppers to dispense the food pieces in different manners depending upon the relationship between the weight of each food piece and at least one predetermined range of weights such that food pieces with weights falling within the predetermined range are dispensed in the same manner different from the manner in which those with weights falling outside the predetermined range are dispensed.

9. Apparatus according to claim 8, wherein one or more of the weigh hoppers has a pair of dispense gates individually operable under the control of the control system to direct food pieces in respectively different directions.

10. Apparatus according to claim 8 or claim 9, further comprising a set of additional hoppers, one hopper arranged downstream of each weigh hopper so as to receive food pieces from the corresponding weigh hopper, the additional hoppers being controlled to dispense food pieces in the different manners.

11. Apparatus according to claim 10, wherein one or more of the additional hoppers has a pair of dispense gates individually operable under the control of the control system to direct food pieces in respectively different directions.

12. Apparatus according to any of claims 8 to 11, further comprising a movable guide or guides downstream of each weigh hopper or additional hopper and whose position is controlled by the control system to guide food pieces dispensed by the weigh or additional hoppers to respective locations corresponding to their weight.

13. Apparatus according to at least claim 9 or claim 11, further comprising a set of guides downstream of the weigh or additional hoppers whereby one or more of the set is positioned to receive food pieces in response to a first dispense gate opening and one or more of the others of the set is positioned to receive food pieces in response to a second dispense gate opening.

14. Apparatus according to claim 13, wherein the set of guides comprises an inner guide, preferably in the shape of a cone, positioned to receive food pieces in response to the first dispense gate opening, and two or more outer guides positioned to receive food pieces in response to the second dispense gate opening.

15. Apparatus according to any of claims 8 to 11, further comprising an inclined surface downstream of the weigh or additional hoppers, the inclined surface including at least one gate in alignment with food pieces dispensed from a weigh or additional hopper in use and selectively operable to intercept and direct a food piece away from the inclined surface according to its weight, the inclined surface preferably being cone-shaped, one or more gates being provided aligned with each weigh hopper.

16. Apparatus according to any of claims 8 to 15, further comprising a booster hopper downstream of each weigh hopper or additional hopper, each booster hopper having at least two dispense gates independently operable by the control system according to the weight of the food pieces.

17. Apparatus according to any of claims 8 to 16, when dependent on claim 9 or claim 11, further comprising a pair of conveyors extending in different directions from the weighing machine; a pair of rotatably mounted disks above the conveyors and having different radii for receiving food pieces dispensed from the weigh or additional hoppers in response to opening of respective dispense gates, wherein each disk cooperates with a respective scraper so that food pieces are guided from the disk onto a corresponding conveyor as the disk rotates.
